# EUROPÄISCHE PATENTSCHRIFT

(11) **EP 1 979 201 B1**
(45) Veröffentlichungstag und Bekanntmachung des Hinweises auf die Patenterteilung: **24.10.2018**
(21) Anmeldenummer: 07703862.8
(22) Anmeldetag: 15.01.2007
(51) Int. Cl.: B60R 21/0132

(54) **SIGNALVORVERARBEITUNGSEINRICHTUNG MIT BANDPASSFILTERN FÜR KÖRPERSCHALLSENSOREN**
SIGNAL PREPROCESSING DEVICE COMPRISING BAND-PASS FILTERS FOR STRUCTURE-BORNE NOISE SENSORS
DISPOSITIF DE PRÉTRAITEMENT DE SIGNAUX DOTÉ DE FILTRES PASSE-BANDE POUR CAPTEURS DE BRUITS DE STRUCTURE

(30) Priorität: 16.01.2006 DE 102006002203; 20.12.2006 DE 102006060277
(43) Veröffentlichungstag der Anmeldung: 15.10.2008
(73) Patentinhaber: Continental Teves AG & Co. OHG, 60488 Frankfurt am Main (DE); Conti Temic Microelectronic GmbH, 90411 Nürnberg (DE)
(72) Erfinder: FEY, Wolfgang, 65527 Niedernhausen (DE); WEICHENBERGER, Lothar, 86669 Königsmoos (DE); FENDT, Günter, 86529 Schrobenhausen (DE)
(86) Internationale Anmeldenummer: PCT/EP2007/050346
(87) Internationale Veröffentlichungsnummer: WO 2007/082865

(56) Entgegenhaltungen:
- EP-A1- 0 498 312
- EP-A1- 0 567 900
- EP-A2- 1 710 133
- WO-A-2005/036108
- WO-A1-2006/125719
- WO-A1-2006/131224
- DE-A1- 10 015 273

## Beschreibung

Die Erfindung betrifft eine Signalvorverarbeitungseinrichtung gemäß Oberbegriff von Anspruch 1, ein Verfahren zur Vorverarbeitung von Ausgangssignalen von Körperschallsensoren gemäß Oberbegriff von Anspruch 9 sowie die Verwendung der Signalvorverarbeitungseinrichtung in elektronischen Kraftfahrzeugsicherheitssystemen.

Es ist bekannt, Beschleunigungssensoren innerhalb eines Insassenschutzsystems für Kraftfahrzeuge einzusetzen. Solche Beschleunigungssensoren werden zum Beispiel, als so genannte Assistenzsensoren im Fahrzeug verteilt, um eine schnelle und präzise Erfassung eines Aufpralls beziehungsweise eines Unfalls zu ermöglichen. Dadurch ergeben sich jedoch unter anderem die Nachteile eines relativ hohen und kostenintensiven Verkabelungsaufwandes, sowie zusätzliche Kosten für die zusätzlichen Sensoren. Außerdem birgt ein großer Verkabelungsaufwand auch immer ein gewisses Risiko bezüglich eines Ausfalls in sich, was in einem sicherheitskritischen Umfeld, was ein Kraftfahrzeug darstellt, beispielsweise durch Redundanzen verringert werden kann.

Deshalb werden zur Unfallerkennung alternativ Körperschallsensoren eingesetzt, welche nicht so nahe an der Fahrzeugaußenhaut angeordnet sein müssen, da sich Körperschallwellen im Fahrzeug weitaus schneller ausbreiten, als durch Beschleunigungsänderungen erzeugte Schwingungen.

Drückschrift WO 2005/036108 schlägt einen gattungsgemäßen Fahrzeugsensor zur Erfassung einer Beschleunigung und von Körperschall (Körperschallsensor) vor, der beispielsweise als Crashsensor verwendet wird. Zwei solcher Sensoren werden im Wesentlichen zentral im Kraftfahrzeug, mit jeweils unterschiedlicher Ausrichtung, angeordnet. Diese Körperschallsensoren sind mit dem Fahrzeugchassis gekoppelt. Außerdem ist diesen Körperschallsensoren eine lokale Signalverarbeitungseinheit nachgeschaltet, welche einen Filter zur Signalverarbeitung und zum selektiven Erfassen der Beschleunigung und des Körperschalls aufweist. Diese Verarbeitungseinheit überträgt ihre Ausgangssignale an eine Zentraleinheit zur Auswertung. Die Ausgangssignale der Körperschallsensoren in solch einer Anordnung haben relativ breitbandige Frequenzspektren und weisen insbesondere hochfrequente Signalanteile auf. Die Auswertung dieser Signale ist relativ aufwändig, da im Rahmen einer Digitalisierung der Signale, diese mit mehr als der doppelten oberen Grenzfrequenz ihres jeweils bandbegrenzten Spektrums abgetastet werden müssen (Shannon'sches Abtasttheorem), um Aliasingeffekte zu vermeiden. Dies macht einerseits den Einsatz leistungsstarker und damit relativ kostspieliger Analog-/Digitalwandler in der Zentraleinheit nötig und ist auch in sofern nachteilig, als dass ein Signal, welches mit relativ hoher Frequenz abgetastet wird, eine relativ große Datenmenge im Zuge der Digitalisierung verursacht. Dies ist deshalb besonders nachteilig, als das der Übertragungskanal zwischen den Sensoren und der Zentraleinheit häufig durch eine einfache serielle Schnittstelle realisiert wird, welche unter Umständen nicht genügend Kanalkapazität aufweist. Zusätzlich wird durch die relativ großen Datenmengen die Recheneinheit der Zentraleinheit, welche normalerweise eine Vielzahl an Prozessen ausführen muss, stark belastet und gegebenenfalls überlastet.

Die Erfindung hat sich die Aufgabe gestellt eine Signalvorverarbeitungseinrichtung und ein Verfahren zur Vorverarbeitung von Körperschallsensorsignalen vorzuschlagen, welche den Einsatz von breitbandigen Körperschallsensoren erleichtert und/oder die Anforderungen an die Datenschnittstelle zu mindestens einer zentralen elektronischen Kontrolleinheit verringert und/oder die von der Zentraleinheit zu verarbeitende Datenmenge verringert.

Die Aufgabe wird erfindungsgemäß gelöst durch die Signalvorverarbeitungseinrichtung gemäß Anspruch 1 und durch das Verfahren zur Vorverarbeitung von Ausgangssignalen von Körperschallsensoren gemäß Anspruch 7.

Der Erfindung liegt der Gedanke zu Grunde eine Signalvorverarbeitungseinrichtung vorzuschlagen, welche in einen Körperschallsensor beziehungsweise in einen Beschleunigungssensor zur Erfassung von Körperschall, integriert ist oder welche eingangsseitig mit mindestens einem solchen Sensor verbunden ist und ausgangsseitig mit mindestens einem Signalkanal zu mindestens einer zentralen elektronischen Kontrolleinheit verbunden ist. Dabei weist die Signalvorverarbeitungseinrichtung mindestens ein Filtermodul auf, welches mindestens zwei Bandpassfilter umfasst.

Das Ausschneiden der mindestens zwei Frequenzbänder stellt eine Irrelevanzcodierung dar, bei welcher die Auslegung der mindestens zwei Bandpässe vorzugsweise so gewählt wird, dass ein möglichst geringer Informationsverlust stattfindet. Dabei ist es insbesondere vorgesehen, die Filter so auszulegen, dass bezüglich eines bestimmten Kraftfahrzeugtyps die relevanten Informationen durchgelassen werden. Dies geschieht beispielsweise unter Berücksichtigung von Resonanzfrequenzen bestimmter Baugruppen oder aufgrund von Laborversuchen. Durch diese Maßnahmen kann der Informationsverlust minimiert werden und dennoch die Bandbreite der weiter zu verarbeitenden Signale verringert werden.

Unter dem Begriff Körperschallsensor wird auch ein Beschleunigungssensor oder ein Beschleunigungsaufnehmer verstanden, welcher so ausgebildet ist, dass dieser Körperschall erfassen kann, insbesondere Körperschall, welcher sich in einem Kraftfahrzeugchassis ausbreitet.

Unter dem Begriff Sensorsignal wird sowohl das direkte Ausgangssignal mindestens eines Körperschallsensors verstanden, als auch das schon teilweise vorverarbeitete Signal, welches im Laufe eines vorzugsweise mehrstufigen Verfahrens bzw. beim Durchlaufen mehrere Module im Signalpfad, im Rahmen der Signalvorverarbeitungseinrichtung, weiterverarbeitet werden soll.

Die Signalvorverarbeitungseinrichtung beinhaltet Module, Schaltungen und/oder Elemente zur Signal- und/oder Datenverarbeitung, wobei das/die Modul/e zweckmäßigerweise ganz oder teilweise, insbesondere auch das mindestens eine Filtermodul, als elektronische Schaltung/en ausgebildetist/sind oder durch mindestens ein Programm verwirklicht ist/sind, welche/s von einer integrierten elektronischen Schaltung ausgeführt wird/werden.

Die Module und anderen Teile der Signalvorverarbeitungseinrichtung sind alternativ vorzugsweise analog oder digital ausgebildet beziehungsweise zur analogen oder digitalen Signal-/Datenverarbeitung geeignet. An einer Stelle im Signalpfad, an der ein Wechsel zwischen Analog nach Digital oder anders herum erfolgt, weist der jeweilige Signalpfad zweckmäßigerweise einen entsprechenden Analog-/Digitalwandler oder Digital-/Analogwandler auf.

Das Filtermodul weist vorzugsweise mindestens drei Bandpassfilter auf.

Die mindestens zwei Bandpassfilter des Filtermoduls sind bevorzugt parametrisierbar ausgelegt, zumindest bezüglich der Bandbreite und/oder der Mittenfrequenz. Insbesondere sind zusätzlich die Durchlassdämpfung und/oder weitere Bandpassparameter parametrisierbar. Hierdurch kann die Signalvorverarbeitungseinrichtung im Betrieb optimiert werden und die Datenqualität verbessert werden.

Es ist zweckmäßig, dass die Signalpfade der mindestens zwei Bandpassfilter-Ausgänge des Filtermoduls jeweils eine oder eine gemeinsame Signalverstärkerschaltung aufweisen, wodurch eine Aufbereitung der Signale erreicht wird.

Die Signalvorverarbeitungseinrichtung weist zweckmäßigerweise einen Tiefpass oder einen Filter mit Tiefpasscharakteristik auf, welcher im Wesentlichen das Beschleunigungsspektrum des mindestens einen Sensorsignals durchlässt. Insbesondere ist der Filter mit Tiefpasscharakteristik ein Bandpass, welcher Frequenzen unter einer ersten definierten Frequenz durchlässt, aber zusätzlich Frequenzen unter einer zweiten definierten Frequenz herausfiltert, wobei diese zweite definierte Frequenz deutlich unter der ersten definierten Frequenz liegt.

Es ist bevorzugt, die mindestens eine Summiererschaltung und/oder die Integratorschaltung und/oder den Ausgang des Tiefpasses oder des Filters mit Tiefpasscharakteristik, welcher im Wesentlichen das Beschleunigungsspektrum durchlässt, an ein Codierungsmodul anzuschließen. Dieses Codierungsmodul ist insbesondere so ausgelegt, dass es eine Quellencodierung und/oder eine Kanalcodierung seines mindestens einen Eingangssignals durchführen kann. Durch eine Quellencodierung werden Redundanzen verringert oder beseitigt und im Zuge einer Kanalcodierung wird die Störanfälligkeit der Datenübertragung verringert indem Übertragungsfehler erkannt und/oder korrigiert werden können.

Vorzugsweise ist dem Codierungsmodul eine definierte Schnittstelle nachgeschaltet. In dieser Schnittstelle wird das mindestens eine Ausgangssignal der Signalvorverarbeitungseinrichtung so aufbereitet, dass eine robuste und definierte Übertragung über mindestens einen Übertragungskanal zu mindestens einer elektronischen Kontrolleinheit erfolgen kann. Alternativ vorzugsweise findet die Leitungscodierung beziehungsweise eine schnittstellengemäße Signalanpassung im Codierungsmodul statt, wodurch eine zusätzliche Schnittstelle entfällt. Insbesondere werden die Daten digital und seriellübertragen.

Die Signalvorverarbeitungseinrichtung ist zweckmäßigerweise zusammen mit mindestens einem Körperschallsensor und/oder mindestens einem Körperschallmesswandlerelement, auf einem Chip integriert. Alternativ zweckmäßig ist, dass die Signalvorverarbeitungseinrichtung und der/das mindestens eine Körperschallsensor/-sensorelement separat auf zwei Chips integriert sind und diese beiden insbesondere per Flip-Chip-Technologie miteinander verbunden sind.

Das gesamte Signalvorverarbeitungseinrichtung oder einzelne Module oder Teile sind bevorzugt als Programm und/oder Teilprogramme verwirklicht, welche durch eine integrierte Schaltung, vorzugsweise einen DSP (Digital Signal Processor) ausgeführt, bzw. von diesem abgearbeitet, werden. Durch die Verwendung eines DSPs ist die Auslegung der Signalvorverarbeitungseinrichtung flexibel. Zusätzlich sind DSPs teilweise günstiger als anwenderspezifische integrierte Schaltungen (ASICs). Alternativ oder ergänzend bevorzugt sind einzelne Module oder Teile der Signalvorverarbeitungseinrichtung als Code, insbesondere als ein Bitcode, verwirklicht, welcher als Ansteuerung eines logischen Mehrzweckchips, wie einem FPGA (field-programmable gate array), verwendet werden. Vor allem bei relativ geringen Stückzahlen können so Kosten gegenüber der Verwendung von ASICs gespart werden. Vorzugsweise ist der mindestens eine Körperschallsensor so ausgelegt, dass diese/r mindestens auch Frequenzen ab 2 Kiloherz erfassen kann/können. Insbesondere ist der Körperschallsensor so ausgelegt, dass er zusätzlich zum Körperschall auch Beschleunigungen, besonders bevorzugt mit Frequenzen unter 500 Hz erfassen kann und zusätzlich an die Signalvorverarbeitungseinrichtung überträgt.

Dem erfindungsgemäßen Verfahren liegt der Gedanke zu Grunde, ein Verfahren vorzuschlagen, welches eine Vorverarbeitung mindestens eines Ausgangssignals eines oder mehrerer Körperschallsensor(s)/en beziehungsweise eines oder mehrerer Beschleunigungssensor(s)/en zur Erfassung von Körperschall durchführt. Dabei wird das mindestens eine Ausgangssignal an eine Signalvorverarbeitungseinrichtung übertragen, in welcher mindestens eine Filterung durchgeführt wird, wobei bei der Filterung mindestens zwei Frequenzbänder durchgelassen werden, welche zumindest teilweise Teil des Körperschallspektrums sind.

Vorzugsweise werden die Signale der mindestens zwei im Rahmen der Filterung durchgelassenen Frequenzbänder zu mindestens einem Summensignal addiert, wodurch insbesondere ein gemeinsames Signal entsteht, welches bezüglich des Sensorsignals spektralbewertet ist.

Das mindestens eine Summensignal wird zweckmäßiger integriert, wodurch eine Leistungsdichtebewertung erfolgt.

Es ist bevorzugt, dass das mindestens eine Summensignal und/oder das integrierte Signal und/oder ein durchgelassenes Signal, welches im Wesentlichen das Beschleunigungsspektrum des mindestens einen Sensorsignals umfasst, eine Quellencodierung und/oder Kanalcodierung durchläuft. Das Ausgangssignal dieser mindestens einen Codierung wird insbesondere an eine definierte Schnittstelle zur Übertragung an mindestens eine elektronische Kontrolleinheit gesendet.

Die Quellencodierung umfasst bevorzugt eine Redundanzreduktion, insbesondere ein Redundanzreduktion entsprechend dem Huffmann-Code, alternativ insbesondere eine,Irrelevanzcodierung. Besonders bevorzugt erfolgt eine Irrelevanzcodierung in Abhängigkeit bekannter Parameter und/oder Bedingungen, nach welchen weniger relevante Daten-/Signalanteile weggelassen werden.

Einzelne oben aufgeführte Verfahrensschritte sind zweckmäßigerweise miteinander zu kombinieren, wegzulassen, sowie die Reihenfolge der Verfahrensschritte zu ändern, wodurch entsprechende bevorzugte, alternative Ausgestaltungen des Verfahrens definiert sind.

Es ist zweckmäßig, dass einzelne Module der Signalvorverarbeitungseinrichtung und/oder bestimmte Schritte des Verfahrens, sowohl analog, als auch digital ausgebildet sind/ ausgeführt werden können. Dies führt zu entsprechenden, alternativ bevorzugten, Varianten der Signalvorverarbeitungseinrichtung und des Verfahrens.

Die erfindungsgemäße Signalvorverarbeitungseinrichtung ist zur Verwendung in Kraftfahrzeugen, insbesondere in elektronischen Kraftfahrzeugsicherheitssystemen, besonders bevorzugt in Insassenschutzsystemen und/oder Fußgängerschutzsystemen, vorgesehen.

Bei einer Verwendung der erfindungsgemäßen Signalvorverarbeitungseinrichtung in Kraftfahrzeugen sind vorzugsweise mindestens zwei unterschiedlich ausgerichtete Körperschallsensoren vorgesehen, deren Ausgangssignale entsprechend vorverarbeitet werden. Die erfindungsgemäßen Signalvorverarbeitungseinrichtung und die Körperschallsensoren/- sensorelemente sind dabei vorzugsweise an einer im Wesentlichen zentralen Position innerhalb des Kraftfahrzeugs, insbesondere auf oder im Mitteltunnel, angeordnet. Die Verwendung der erfindungsgemäßen Signalvorverarbeitungseinrichtung und des erfindungsgemäßen Verfahrens ist insbesondere zur Crashdetektion in Insassenschutzsystemen, wie beispielsweise Airbagsystemen, und/oder in Fußgängerschutzsystemen vorgesehen. Diese Systeme, welche eine Crashdetektion durch den Einsatz von Körperschallsensoren umfassen, ermitteln besonders bevorzugt den Ort des Unfalls am Fahrzeug, beispielsweise ob es sich um einen Frontcrash oder Seitencrash handelt und bestimmen ganz besonders bevorzugt die Art des Unfallhindernisses, ob es sich beispielsweise um einen Baum oder einen Fußgänger handelt. Weitere Einsatzmöglichkeiten sind beispielsweise der Einsatz in Diagnose- oder Überwachungssystemen, bei denen eine Schwingungsanalyse bestimmter Elemente erforderlich ist, wie bei einer Lagerüberwachung, in einem System zur Überwachung des Fahrbahnzustandes, in welchem eine Schwingungsanalyse der im Fahrwerk auftretenden Schwingungen durchgeführt wird. Des Weiteren ist beispielsweise eine Verwendung in Fahrwerks- und Fahrdynamikregelungssystemen bevorzugt.

Weitere bevorzugte Ausführungsformen ergeben sich aus den Unteransprüchen und der nachfolgenden Beschreibung von Ausführungsbeispielen an Hand von Figuren.

Es zeigen in schematischer Darstellung
- Fig. 1: eine Anordnung von Körperschallsensoren in einem Kraftfahrzeug,
- Fig. 2: das Spektrum eines Körperschallsensorsignals,
- Fig. 3: ein schematisches Ausführungsbeispiel einer Signalvorverarbeitungseinrichtung und deren Funtionsweise,
- Fig. 4: eine beispielhafte Signalvorverarbeitungseinrichtung mit analoger Filterung,
- Fig. 5: eine alternativ beispielhafte Signalvorverarbeitungseinrichtung mit digitaler Filterung und Signalverarbeitung und
- Fig. 6: ein Ausführungsbeispiel mit einem DSP.

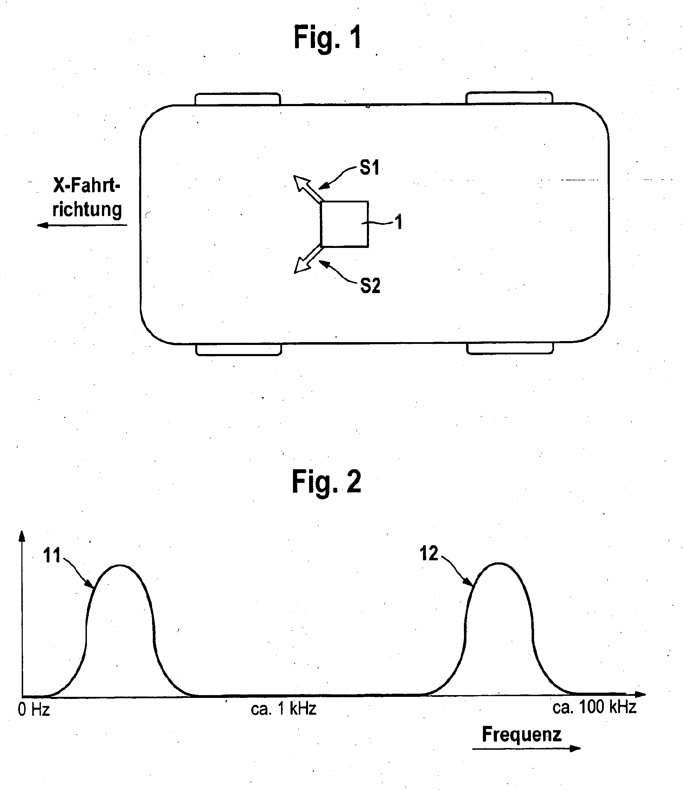

Fig. 1 zeigt eine Anordnung von Körperschallsensoren S1, S2 in einem Kraftfahrzeug gemäß dem Stand der Technik. Dabei sind diese beiden, unterschiedlich ausgerichteten Körperschallsensoren S1, S2 sowie eine Einrichtung zur Signalvorverarbeitung 1, in welcher beispielsweise eine Filterung der-Sensorsignale durchgeführt wird,relativ zentral im Kraftfahrzeug angeordnet. Da diese Sensoren S1, S2 neben der Beschleunigung auch Körperschall erfassen, ist eine Anbringung nahe der Fahrzeugaußenhaut nicht erforderlich, da sich die Körperschallwellen weitaus schneller im Fahrzeug ausbreiten als die durch Beschleunigungsänderungen erzeugten Schwingungen. Dadurch kann ein Unfall in einer zur Auslösung eines Sicherheitssystems erforderlichen Zeit detektiert werden.

In Fig. 2 ist das beispielgemäße Spektrum eines Signales, eines in einem Kraftfahrzeug eingesetzten Körperschallsensors, veranschaulicht. Dieses weist zwischen 0Hz und 1kHz einen ersten Spektralanteil 11 bestimmter Bandbreite auf, der charakteristisch für die durch den Sensor erfassten Beschleunigungen ist. Der zweite Spektralanteil 12 ist deutlich hochfrequenter und ist charakteristisch für den erfassten Körperschall.

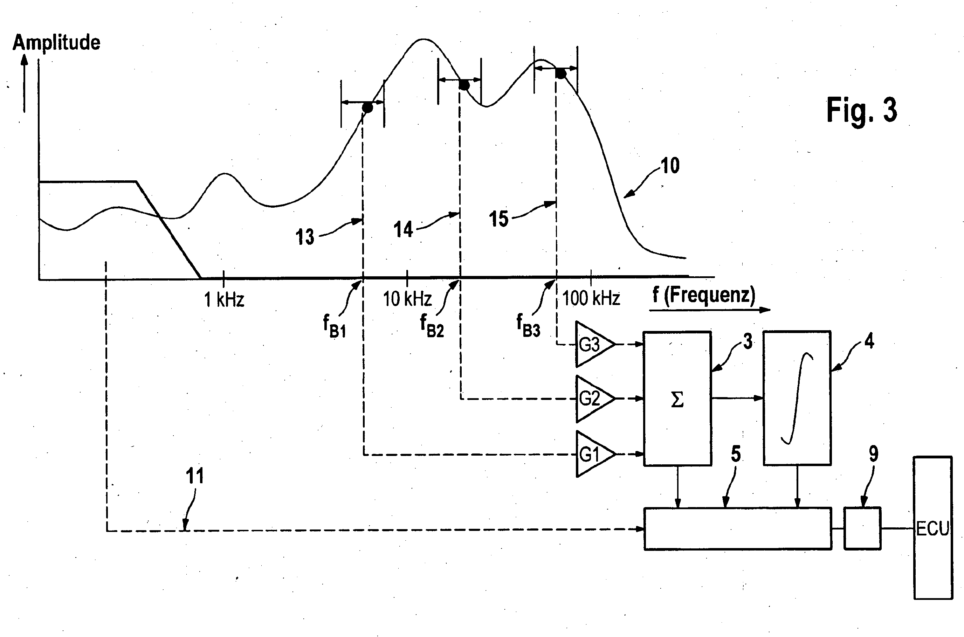

Fig. 3 zeigt schematisch ein Ausführungsbeispiel einer Signalvorverarbeitungseinrichtung und deren Funktionsweise. Im oberen Teil der Darstellung ist das Spektrum eines Sensorsignals 10 erkennbar, aus welchem drei definierte Frequenzbänder 13,14,15 durch Bandpassfilterung ausgeschnitten werden. Diese durch die Bandpassfilter durchgelassenen Frequenzbänder 13, 14, 15 sind Teil des Körperschallspektrums Sensorsignals 10 und weisen beispielgemäß Frequenzen von deutlich über 1 kHz auf. Der Frequenzbereich deutlich unter 1 kHz ist dem Beschleunigungsspektrum 11 zuzuordnen und wird durch einen Tiefpass ausgeschnitten. Die drei Frequenzbänder 13, 14, 15 werden durch jeweils einen Signalverstärker G1,G2,G3 verstärkt und einem Addierer 3 zugeführt, der diese drei Signale addiert und daraus ein, bezüglich Sensorsignal 10, spektralbewertetes Signal erzeugt. Dieses Signal des Addiererausgangs wird an einen Integrierer 4 übertragen, der im Zuge einer Integration eine Leistungsdichtebewertung vornimmt. Zusätzlich werden ein Ausgangssignal des Addierers, das Ausgangssignal des Integrierers sowie das Signal des Beschleuniungsspektrum einem Codierungsmodul 5 zugeführt. Codierungsmodul 5 codiert die Informationen des spektral- und des leistungsdichtebewerteten Signals, sowie des Beschleunigungssignals und überträgt diese an eine Schnittstelle 9. In Schnittstelle 9 wird das codierte Signal aufbereitet und in einen definierten Leitungscode umgewandelt. Danach wird dieses Signal an die elektronische Kontrolleinheit ECU zur Auswertung übertragen.

In einem nicht dargestellten Ausführungsbeispiel wird auch die Signalanpassung an die jeweilige Schnittstelle beziehungsweise die entsprechende Leitungscodierung in Codierungsmodul 5 durchgeführt, wodurch zusätzliche Schnittstelle 9 entfällt.

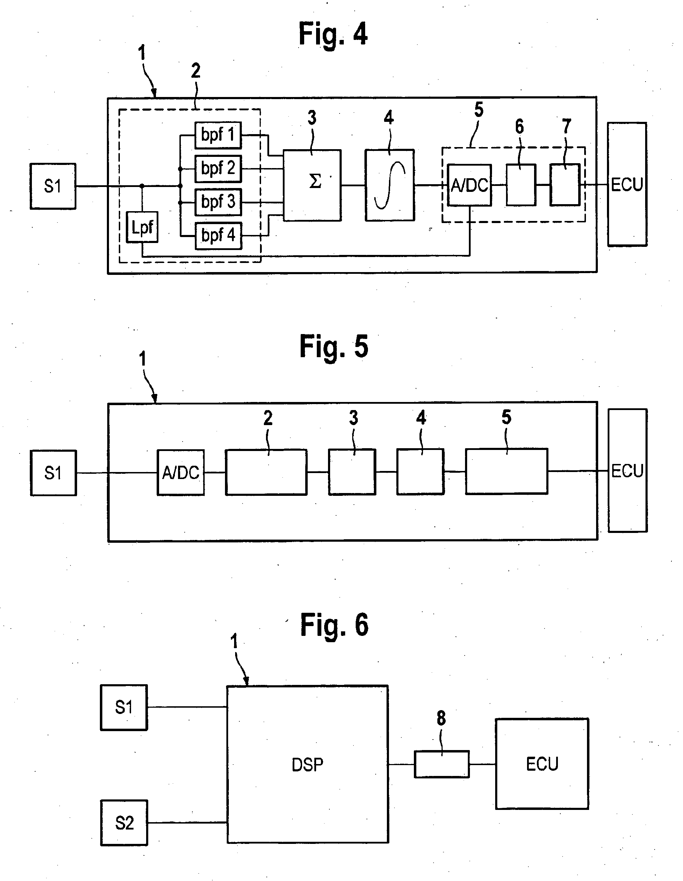

In Fig. 4 wird eine beispielhafte Signalvorverarbeitungseinrichtung 1 gezeigt, welche zwischen Körperschallsensor S1 und elektronische Kontrolleinheit ECU geschaltet ist und eine analoge Signalfilterung durchführt. Dazu weist Signalvorverarbeitungseinrichtung 1 Filtermodul 2 auf, welches einen Tiefpassfilter lpf und vier Bandpassfilter bpf1, bpf2, pbf3, pbf4 umfasst. Das Ausgangssignal Sensors S1 durchläuft dabei parallel diese fünf Filter lpf, bpf1, bpf2, pbf3, pbf4, welche das Beschleunigungsspektrum und vier Frequenzbänder des Körperschallspektrums durchlassen. Die Ausgangssignale der Bandpassfilter bpf1, bpf2, pbf3, pbf4 werden in Summiererschaltung 3 zu einem, bezüglich des Sensorsignals, spektralbewerteten Signal addiert und dieses Signal wird an Integratorschaltung 4 übertragen. Der Ausgang von Integratorschaltung 4 beinhaltet die Information über die Leistungsdichte des Sensorsignals und wird ebenso wie das Beschleunigungssignal in einem Analog-/Digitalwandler A/DC eines Codierungsmoduls 5 digitalisiert. Dies geschieht, nicht dargestellt, beispielsweise über einen Multiplexer. Des Weiteren umfasst Codierungsmodul 5 ein Quellencodierungselement 6 und ein Kanalcodierungselement 7. Die codierten Signale beziehungsweise das Ausgangssignal Codierungsmoduls 5 und damit das Ausgangssignal der beispielgemäßen Signalvorverarbeitungseinrichtung 1 werden an eine elektronische Kontrolleinheit ECU eines Kraftfahrzeugsicherheitssystems übertragen.

In einem nicht dargestellten, Fig. 4, ergänzenden Ausführungsbeispiel wird zusätzlich das Ausgangssignal der Summiererschaltung 3 in Analog-/Digitalwandler A/DC Codierungsmoduls 5 digitalisiert und in den weiteren Stufen des Codierungsmoduls weiterverarbeitet. Es wird weiterführend beispielhaft vorgeschlagen, dass Coderierungsmodul 5 zusätzlich ein Codierungselement aufweist, welches eine Leitungscodierung, entsprechend der Spezifikation einer definierten Datenübertragungsschnittstelle, durchführt.

Das in Fig. 5 dargestellte Ausführungsbeispiel einer Signalvorverarbeitungsschaltung 1 ist so ausgebildet, dass die Signalvorverarbeitung im Wesentlichen vollständig digital durchgeführt wird. Das Ausgangssignal des Körperschallsensors S1 wird in einem Analog-/Digitalwandler A/DC digitalisiert und an ein digitales Filtermodul 2 übertragen. Filtermodul 2 umfasst dabei beispielgemäß zwei Bandpassfilter, welche zwei Frequenzbänder des Körperschallspektrums durchlassen. Die gefilterten Signale werden in einer Summiererschaltung 3 zu einem Signal addiert und in Integratorschaltung 4 integriert. Die Ausgangsdaten Intergratorschaltung 4 werden in Codierungsmodul 5 quellencodiert, kanalcodiert und entsprechend der beispielgemäßen seriellen Schnittstellenspezifikation mit einer entsprechenden Leitungscodierung versehen und an elektronische Kontrolleinheit ECU übertragen.

Fig. 6 stellt eine beispielhafte Ausführungsform dar, in welcher zwei Körperschallsensoren S1, S2 an eine Signalvorverarbeitungseinrichtung 1 angeschlossen sind, welche beispielgemäß einen digitalen Signalprozessor DSP umfasst. Dieser weist eine Programmierung auf, in welcher die Signale bandbegrenzt, abgetastet und quantisiert und somit digitalisiert werden und anschließend eine Filterung durchlaufen, welche das Beschleunigungsspekturm und vier definierte Frequenzbänder des Körperschallspektrums durchlässt. Diese Frequenzbänder werden danach summiert, wodurch ein spektralbewertetes Signal entsteht. Dieses Summensignal wird integriert, was einer Leistungsdichtebewertung entspricht. Im Anschluss daran erfolgt eine Quellencodierung dieser Signale (Signal des Beschleunigungsspektrums, spektralbewertetes Signal, leistungsdichtebewertetes Signal), beispielhaft gemäß dem Huffmann-Code, eine Kanalcodierung und eine Leitungscodierung entsprechend den Vorgaben der Schnittstelle, welche beispielgemäß eine digitale, serielle Schnittstelle ist. Die Ausgangssignale des DSP werden über einen Datenübertragungskanal 8, an die zentrale elektronische Kontrolleinheit ECU übertrag

### Bezugszeichenliste

- 1: Signalvorverarbeitungseinrichtung
- 2: Filtermodul
- 3: Summiererschaltung
- 4: Integratorschaltung
- 5: Codierungsmodul
- 6: Quellencodierungselement
- 7: Kanalcodierungselement
- 8: Datenübertragungskanal
- 9: Schnittstelle
- 10: Sensorsignal
- 11: Beschleunigungsspektrum des Sensorsignals
- 12: Körperschallspektrum des Sensorsignals
- 13: Frequenzband 1
- 14: Frequenzband 2
- 15: Frequenzband 3

- A/DC: Analog-/Digitalwandler
- bpf1: Bandpassfilter 1 (band-pass filter)
- bpf2: Bandpassfilter 2 (band-pass filter)
- bpf3: Bandpassfilter 3 (band-pass filter)
- bpf4: Bandpassfilter 4 (band-pass filter)
- DSP: Digitaler Signal Prozessor
- ECU: elektronische Kontrolleinheit
- G1: Signalverstärker 1
- G2: Signalverstärker 2
- G3: Signalverstärker 3
- lpf: Tiefpassfilter (low-pass filter)
- S1: Sensor 1
- S2: Sensor 2

## Patentansprüche

1. Signalvorverarbeitungseinrichtung (1), welche in einen Körperschallsensor (S1, S2) beziehungsweise in einen Beschleunigungssensor zur Erfassung von Körperschall integriert ist oder welche eingangsseitig mit mindestens einem solchen Sensor (S1, S2) verbunden ist und ausgangsseitig mit mindestens einem Signalkanal (8) zu mindestens einer zentralen elektronischen Kontrolleinheit (ECU) verbunden ist, und wobei die Signalvorverarbeitungseinrichtung (1) mindestens ein Filtermodul (2) aufweist, wobei das Filtermodul (2) mindestens zwei Bandpassfilter (bpf1, bpf2, bpf3, bpf4) aufweist, wobei die Signalpfade der mindestens zwei Bandpassfilter-Ausgänge des Filtermoduls (2) an mindestens eine Summiererschaltung (3) angeschlossen sind,
**dadurch gekennzeichnet, dass** mindestens ein Ausgang der mindestens einen Summiererschaltung (3) an den Eingang einer Integratorschaltung (4) angeschlossen ist und dass die Integratorschaltung (4) dazu ausgebildet ist, im Zuge einer Integration eine Leistungsdichtebewertung vorzunehmen.

2. Signalvorverarbeitungseinrichtung (1) nach Anspruch 1,
**dadurch gekennzeichnet, dass** die mindestens zwei Bandpassfilter (bpf1, bpf2, bpf3, bpf4) des Filtermoduls (2) parametrisierbar ausgelegt sind, zumindest bezüglich der Bandbreite und/oder der Mittenfrequenz.

3. Signalvorverarbeitungseinrichtung (1) nach Anspruch 1 oder 2, **dadurch gekennzeichnet, dass** die Signalpfade der mindestens zwei Bandpassfilter-Ausgänge des Filtermoduls (2) jeweils eine oder eine gemeinsame Signalverstärkerschaltung (G1,G2,G3) aufweisen.

4. Signalvorverarbeitungseinrichtung (1) nach mindestens einem der Ansprüche 1 bis 3, **dadurch gekennzeichnet, dass** diese einen Tiefpass (lpf) oder einen Filter mit Tiefpasscharakteristik aufweist, welcher im Wesentlichen das Beschleunigungsspektrum (11) des mindestens einen Sensorsignals (10) durchlässt.

5. Signalvorverarbeitungseinrichtung nach mindestens einem der Ansprüche 1 oder 4, **dadurch gekennzeichnet, dass** die mindestens eine Summiererschaltung (3) und/oder die Integratorschaltung (4) und/oder der Ausgang des Tiefpasses (lpf) oder des Filters mit Tiefpasscharakteristik, welcher im Wesentlichen das Beschleunigungsspektrum (11) durchlässt, an ein Codierungsmoduls (5) angeschlossen ist/sind.

6. Signalvorverarbeitungseinrichtung nach Anspruch 5, **dadurch gekennzeichnet, dass** das Codierungsmodul (5) so ausgelegt ist, dass es eine Quellencodierung und/oder eine Kanalcodierung seines mindestens einen Eingangssignals durchführen kann.

7. Verfahren, welches eine Vorverarbeitung mindestens eines Ausgangssignals (10) eines oder mehrerer Körperschallsensor(s)/en (S1,S2) beziehungsweise eines oder mehrerer Beschleunigungssensor(s)/en zur Erfassung von Körperschall durchführt, wobei das Verfahren insbesondere in einer Signalvorverarbeitungseinrichtung (1) nach mindestens einem der Ansprüche 1 bis 8 durchgeführt wird, wobei das mindestens eine Ausgangssignal (10) an eine Signalvorverarbeitungseinrichtung (1) übertragen wird, in welcher mindestens eine Filterung durchgeführt wird, wobei bei der Filterung mindestens zwei Frequenzbänder (13,14,15) durchgelassen werden, welche zumindest teilweise Teil des Körperschallspektrums (12) sind, wobei mindestens zwei bei der Filterung durchgelassenen Frequenzbänder zu mindestens einem Summensignal addiert werden,
**dadurch gekennzeichnet, dass** das mindestens eine Summensignal integriert wird und dass im Zuge der Integration eine Leistungsdichtebewertung vorgenommen wird.

8. Verfahren nach Anspruch 7, **dadurch gekennzeichnet, dass** das mindestens eine Summensignal und/oder das integrierte Signal und/oder mindestens ein durchgelassenes Signal, welches im Wesentlichen das Beschleunigungsspektrum (11) des mindestens einen Sensorsignals (10) umfasst, eine Quellencodierung und/oder Kanalcodierung durchläuft.

9. Verwendung einer Signalvorverarbeitungseinrichtung (1) gemäß mindestens einem der Ansprüche 1 bis 6 in elektronischen Kraftfahrzeugsicherheitssystemen, insbesondere in Insassenschutzsystemen und/oder Fußgängerschutzsystemen.

## Claims

1. A signal preprocessing device (1) which is integrated into a structure-borne noise sensor (S1, S2), or respectively into an acceleration sensor, in order to detect structure-borne noise, or which is connected on the input side to at least one such sensor (S1, S2), and is connected on the output side with at least one signal channel (8) to at least one central electronic control unit (ECU), and wherein the signal preprocessing device (1) has at least one filter module (2), wherein the filter module (2) has at least two band-pass filters (bpf1, bpf2, bpf3, bpf4), wherein the signal paths of the at least two band-pass filter outputs of the filter module (2) are joined to at least one summing circuit (3), **characterized in that** at least one output of the at least one summing circuit (3) is joined to the input of an integrating circuit (4) and the integrating circuit (4) is configured to carry out a power density evaluation in the course of an integration.

2. The signal preprocessing device (1) according to Claim 1, **characterized in that** the at least two band-pass filters (bpf1, bpf2, bpf3, bpf4) of the filter module (2) are designed to be parametrizable, at least with respect to the bandwidth and/or the mid-band frequency.

3. The signal preprocessing device (1) according to Claim 1 or 2, **characterized in that** the signal paths of the at least two band-pass filter outputs of the filter module (2) each have one or a joint signal amplifier circuit (G1, G2, G3).

4. The signal preprocessing device (1) according to at least one of Claims 1 to 3, **characterized in that** the latter has a low-pass filter (lpf) or a filter having a low-pass characteristic, which substantially allows the acceleration spectrum (11) of the at least one sensor signal (10) to pass through.

5. The signal preprocessing device according to at least one of Claims 1 or 4, **characterized in that** the at least one summing circuit (3) and/or the integrating circuit (4) and/or the output of the low-pass filter (lpf) or of the filter having a low-pass characteristic, which substantially allows the acceleration spectrum (11) to pass through, is/are joined to a coding module (5) .

6. The signal preprocessing device according to Claim 5, **characterized in that** the coding module (5) is designed such that it can perform a source coding and/or a channel coding of its at least one input signal.

7. A method which performs a preprocessing of at least one output signal (10) of one or more structure-borne noise sensor(s) (S1,S2) or respectively of one or more acceleration sensor(s) in order to detect structure-borne noise, wherein the method is in particular performed in a signal preprocessing device (1) according to at least one of Claims 1 to 8, wherein the at least one output signal (10) is transmitted to a signal preprocessing device (1), in which at least one filtering is performed, wherein during the filtering at least two frequency bands (13, 14, 15) are allowed to pass through which are at least partially part of the structure-borne noise spectrum (12), wherein at least two frequency bands which are allowed to pass through during the filtering are added to form at least one composite signal,
**characterized in that** the at least one composite signal is integrated and a power density evaluation is carried out in the course of the integration.

8. The method according to Claim 7, **characterized in that** the at least one composite signal and/or the integrated signal and/or at least one signal which is allowed to pass through, which substantially comprises the acceleration spectrum (11) of the at least one sensor signal (10), run(s) through a source coding and/or channel coding.

9. Use of a signal preprocessing device (1) according to at least one of Claims 1 to 6 in electronic motor vehicle safety systems, in particular in passenger protection systems and/or pedestrian protection systems.

## Revendications

1. Dispositif de prétraitement de signaux (1), lequel est intégré dans un capteur de bruits de structures (S1, S2) ou dans un capteur d'accélération pour la détection de bruits de structure ou lequel est relié du côté entrée à au moins un tel capteur (S1, S2) et est relié du côté sortie par au moins un canal de signal (8) à au moins une unité de commande électronique (ECU), et le dispositif de prétraitement de signaux (1) présentant au moins un module de filtre (2), le module de filtre (2) présentant au moins deux filtres passe-bande (bpf1, bpf2, bpf3, bpf4), les chemins de signaux des au moins deux sorties de filtres passe-bande du module de filtre (2) étant connectés à au moins un circuit additionneur (3), **caractérisé en ce qu'**au moins une sortie de l'au moins un circuit additionneur (3) est connectée à l'entrée d'un circuit intégrateur (4) et **en ce que** le circuit intégrateur (4) est formé pour exécuter une évaluation de la densité de puissance lors de l'intégration.

2. Dispositif de prétraitement de signaux (1) selon la revendication 1, **caractérisé en ce que** les au moins deux filtres passe-bande (bpfl, bpf2, bpf3, bpf4) du module de filtre (2) sont conçus de façon paramétrable, au moins relativement à la bande passante et/ou à la fréquence centrale.

3. Dispositif de prétraitement de signaux (1) selon la revendication 1 ou 2, **caractérisé en ce que** les chemins de signaux des au moins deux sorties de filtres passe-bande du module de filtre (2) présentent chacun un circuit d'amplification de signal ou un circuit d'amplification de signal commun (G1, G2, G3).

4. Dispositif de prétraitement de signaux (1) selon au moins l'une des revendications 1 à 3, **caractérisé en ce que** celui-ci présente un passe-bas (lpf) ou un filtre avec caractéristique passe-bas, lequel transmet essentiellement le spectre d'accélération (11) de l'au moins un signal de capteur (10).

5. Dispositif de prétraitement de signaux selon au moins l'une des revendications 1 ou 4, **caractérisé en ce que** l'au moins un circuit additionneur (3) et/ou le circuit intégrateur (4) et/ou la sortie du passe-bas (lpf) ou du filtre avec caractéristique passe-bas, lequel transmet essentiellement le spectre d'accélération (11), est/sont connecté(s) à un module de codage (5).

6. Dispositif de prétraitement de signaux selon la revendication 5, **caractérisé en ce que** le module de codage (5) est conçu de telle sorte qu'il peut exécuter un codage de source et/ou un codage de canal de son au moins un signal d'entrée.

7. Procédé, lequel exécute un prétraitement d'au moins un signal de sortie (10) d'un ou de plusieurs capteur(s) de bruits de structure (S1, S2) ou d'un ou de plusieurs capteur(s) d'accélération pour la détection de bruits de structure, le procédé étant exécuté en particulier dans un dispositif de prétraitement de signaux (1) selon au moins l'une des revendications 1 à 8, l'au moins un signal de sortie (10) étant transmis à un dispositif de prétraitement de signaux (1) dans lequel au moins un filtrage est exécuté, au moins deux bandes de fréquence (13, 14, 15) transmises lors du filtrage, lesquelles font partie, au moins partiellement, du spectre de bruits de structure, étant ajoutées à au moins un signal somme,
**caractérisé en ce que** l'au moins un signal somme est intégré et **en ce qu'**une évaluation de densité de puissance est exécutée lors de l'intégration.

8. Procédé selon la revendication 7, **caractérisé en ce que** l'au moins un signal somme et/ou le signal intégré et/ou au moins un signal transmis, lequel comprend essentiellement le spectre d'accélération (11) de l'au moins un signal de capteur (10) sont soumis à un codage de source et/ou un codage de canal.

9. Utilisation d'un dispositif de prétraitement de signaux (1) selon au moins l'une des revendications 1 à 6 dans des systèmes de sécurité électroniques pour véhicules à moteur, en particulier dans des systèmes de protection des occupants et/ou des systèmes de protection de piétons.
